(19) Europäisches Patentamt
European Patent Office
Office européen des brevets

(11) **EP 1 315 945 B1**

(12) **EUROPEAN PATENT SPECIFICATION**

(45) Date of publication and mention
of the grant of the patent:
**10.03.2010 Bulletin 2010/10**

(51) Int Cl.:
***G01C 21/26*** *(2006.01)*    ***G01C 25/00*** *(2006.01)*
***G01C 21/16*** *(2006.01)*

(21) Application number: **01966576.9**

(22) Date of filing: **04.09.2001**

(86) International application number:
**PCT/US2001/027496**

(87) International publication number:
**WO 2002/018873 (07.03.2002 Gazette 2002/10)**

(54) **CALIBRATION OF MULTI-AXIS ACCELEROMETER IN VEHICLE NAVIGATION SYSTEM USING GPS DATA**

KALIBRIERUNG EINES MEHRACHSIGEN BESCHLEUNIGUNGSSENSORS IN EINEM FAHRZEUGNAVIGATIONSSYSTEM MITTELS GPS-DATEN

ETALONNAGE D'UN ACCELEROMETRE MULTIAXIAL DANS UN SYSTEME DE NAVIGATION D'UN VEHICULE AU MOYEN DE DONNEES GPS

(84) Designated Contracting States:
**DE FR GB**

(30) Priority: **01.09.2000 US 230049 P**

(43) Date of publication of application:
**04.06.2003 Bulletin 2003/23**

(73) Proprietor: **MiTAC International Corporation Taiwan (TW)**

(72) Inventors:
• **BEGIN, John**
  **Sterling Heigts, MI 48314 (US)**

• **CHEOK, Ka, C.**
  **Rochester Hills, MI 48306 (US)**

(74) Representative: **Piésold, Alexander James et al Dehns**
**St Bride's House**
**10 Salisbury Square**
**London**
**EC4Y 8JD (GB)**

(56) References cited:
**EP-B- 0 996 047     WO-A-00/17607**
**US-A- 5 862 511**

**Description**

BACKGROUND OF THE INVENTION

The present invention relates generally to vehicle navigation systems and more particularly to a system and method for calibrating accelerometers in the vehicle navigation system.

Some known vehicle navigation systems include sensors whose orientation relative to the vehicle must be known in order to provide dead-reckoning. One known navigation system includes an accelerometer suite comprising three orthogonally mounted accelerometers. The accelerometer provides acceleration signals in three mutually orthogonal axes. A first accelerometer is aligned vertically with the vehicle, i. e., with gravity. A second accelerometer is aligned with the longitudinal axis of the vehicle to provide a signal indicating forward and rearward acceleration, from which speed can be determined. A third accelerometer, mounted orthogonally to the other two, provides lateral acceleration information, which is used to indicate change in heading.

In previous navigation system, the accelerometers had to be precisely aligned with the associated axes of the vehicle in order to provide accurate information. The accelerometer is mounted in a known orientation in the vehicle. Hardware, such as adjustment screws, is provided to fine tune the orientation of the three accelerometers to align the three accelerometers with the corresponding axes of the vehicle. Even after time-consuming adjustment, the accelerometers may not be properly aligned with the axes of the vehicle. The alignment may also change over time.

To eliminate these problems, a technique was developed in which there were methods to determine a linear transformation that can be applied to orthogonal 3-axis accelerometer data and essentially 'rotate' (align) it to the vehicle body frame. A vehicle navigation system that uses this technique is disclosed in WO-A-00/17607. This method has been very successful, but it requires the vehicle to stop and start several times. A particularly important application is within navigation products that are specifically designed to be semi-portable and/or temporarily installed within a vehicle. If the navigation system is moved to different vehicles frequently, the stop-start learn algorithm can become a little cumbersome.

Other sensors, such as angular rate sensors and compasses, also must be in a known orientation relative to the vehicle in order to provide dead reckoning information.

SUMMARY OF THE INVENTION

Viewed from one aspect, the present invention provides a vehicle navigation system comprising: an inertial sensor which generates a plurality of sensor signals each associated with an axis of the sensor; means for propagating a position of a vehicle in which the inertial sensor is disposed, based on the plurality of sensor signals, the position propagating means using a transformation matrix based on global positioning system data for correcting misalignment between the axes of the inertial sensor and the corresponding axes of a frame of the vehicle; and means for transforming the plurality of sensor signals to a wander-azimuth reference frame of the vehicle.

Viewed from another aspect, the present invention provides a method of calibrating an inertial sensor in a vehicle navigation system comprising: using an inertial sensor to generate a plurality of signals which are each associated with an axis of the sensor; propagating a position of a vehicle in which the inertial sensor is disposed, using the plurality of sensor signals and a transformation matrix based on global positioning system data which corrects misalignment between the axes of the inertial sensor and the corresponding axes of a frame of the vehicle; and transforming the plurality of sensor signals to a wander-azimuth reference frame of the vehicle.

The present invention permits a sensor to be installed in the vehicle in any unknown orientation and be calibrated without starting and stopping the vehicle.

The invention will be described with respect to a three-axis orthogonal accelerometer suite as an example, as other types of sensors would also benefit from this invention.

The navigation system learns the orientation of the accelerometer suite based upon GPS data and propagates the position of the vehicle based upon the acceleration signals from the accelerometer after learning its orientation.

The navigation system determines the orientation of the accelerometer relative to the vehicle and generates a transformation matrix. The transformation matrix transforms signals from the accelerometer suite reference frame to the vehicle reference frame (which is the vehicle's wander-azimuth reference frame). The transformed acceleration signals are then used to provide dead reckoning. More particularly, a forward acceleration signal is used to determine the speed of the vehicle, while a lateral acceleration signal indicates change in the current heading of the vehicle.

One advantage to this new method is that the system can detect any changes in the installation orientation. If the navigation system is placed on the vehicle floor or seat and if it moves a little for any reason, the new method will be able to detect and correct the misalignment while moving. This invention is a collection of new methods of determining the same transformation matrix and hence attaining correct alignment using GPS signals as opposed to stop-start maneuvers. The advantage of this invention is that the orientation can be learned even when the vehicle does riot stop.

The accelerometer is installed into the vehicle in any orientation, unknown to the navigation system. Then, the navigation system compares changes in velocity (and/or heading) as measured by the GPS data to the data from the accelerometers (or angular rate sensors). A transformation matrix of the sensor suite reference frame to the vehicle reference frame (the vehicle wander-azimuth frame) is generated. The transformation matrix converts the inertial sensor suite data to the desired reference frame.

BRIEF DESCRIPTION OF THE DRAWINGS

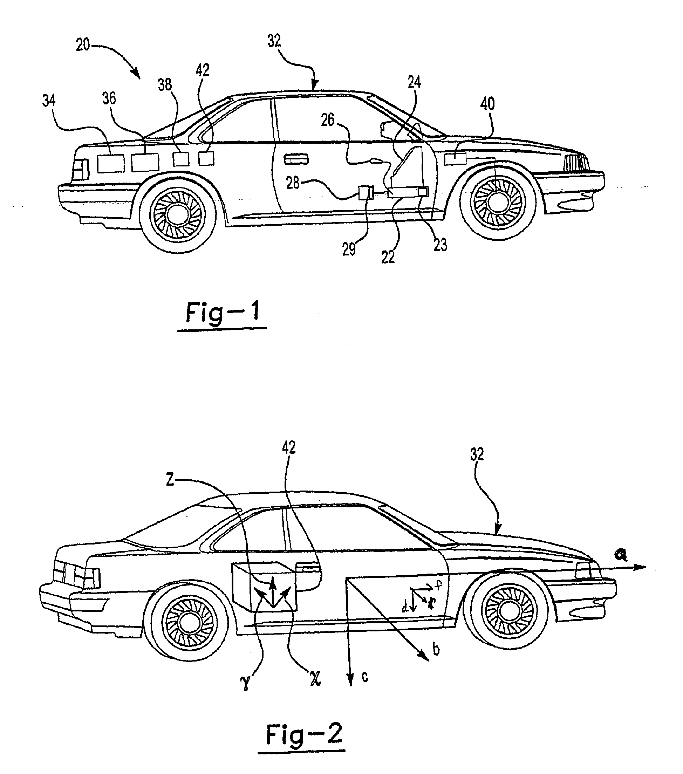

Other advantages of the present invention will be readily appreciated as the same becomes better understood by reference to the following detailed description when considered in connection with the accompanying drawings wherein: Figure 1 is a schematic of the navigation system of the present invention installed in a vehicle; and Figure 2 is a perspective view of the vehicle and accelerometer of Figure 1, with the accelerometer installed in an unknown orientation in the vehicle.

DETAILED DESCRIPTION OF A PREFERRED EMBODIMENT

The navigation system 20 of the present invention is shown schematically in Figure 1. The navigation system 20 includes a CPU 22 having RAM 23 and connected to a display 24, such as a high resolution LCD or flat panel display. The CPU 22 is also connected to an input device 26 such as a mouse, keyboard, key pad, remote device or microphone. Alternatively, the display 24 can be a touch screen display. The navigation system 20 further includes a storage device 28, such as a hard drive 28 or CD ROM, connected to the CPU 22. The storage device 28 contains a database 29 including a map of all the roads in the area to be traveled by the vehicle 32 as well as the locations of potential destinations, such as addresses, hotels, restaurants, or previously stored locations. The software for the CPU 22, including the graphical user interface, route guidance, operating system, position-determining software, etc may also be stored in storage device 28 or alternatively in ROM or flash memory.

The navigation system 20 preferably includes position and motion determining devices, such as a GPS receiver 34, a three-axis angular rate sensor suite 36, a three-axis compass 38, a wheel speed sensor 40 and a multi-axis accelerometer 42, all connected to the CPU 22 (connections not shown for simplicity). Such position and motion determining devices are well known and are commercially available. Based upon the particular needs of a particular system, any combination of these devices could be utilized. The navigation system also determines velocity from the GPS data from GSP receiver 34 generally utilizing the technique described in U.S. Patent No. 6,029,111, which provides GPS velocity data, including heading, and delta velocity and delta heading information.

As is well known, the position and motion determining devices determine the position of the vehicle 32 relative to the database of roads utilizing dead-reckoning, map-matching, etc. Further, as is known in navigation systems, the user can select a destination relative to the database of roads utilizing the input device 26 and the display 24. The navigation system 20 then calculates and displays a recommended route directing the driver of the vehicle 32 to the desired destination. Preferably, the navigation system 20 displays turn-by-turn instructions on display 24, guiding the driver to the desired destination.

Figure 2 illustrates the multi-axis accelerometer 42 having *axes x, y, z* installed in the vehicle 32 having a longitudinal axis *a*, a lateral axis *b* and a vertical axis *c*. The longitudinal axis *a* of the vehicle 32 is defined in the forward direction of the vehicle 32. The lateral axis *b* is orthogonal to both the longitudinal and vertical axes a, c and is defined to be in the right direction. The vertical axis *c* is orthogonal to the other axes *a* and *b* and is defined in the downward direction. The axes *x, y, z* of the accelerometer 42 are mutually orthogonal, but are in an orientation which may be completely unknown relative to the vehicle axes *a, b, c.*

The navigation system 20 of the present invention automatically learns the orientation of the accelerometer 42 relative to the vehicle *axes a, b, c* and then utilizes signals from the accelerometer 42 to propagate the position of the vehicle 32. Although the invention will be described with respect to determining the orientation of an orthogonal axis accelerometer suite installed in the vehicle, the invention could also be used to determine the orientation of other inertial sensor suites, such as an angular rate sensor suite or a three-axis compass.

The methods for using GPS data to determine Sensor Suite orientation generally involve one or more orthogonal sensor systems such as a 3-axis accelerometer or 3-axis compass or 3-axis angular rate sensor. These are three similar sensors mounted orthogonal to each other.

For all types of sensors, the algorithm is similar. In all cases. situations and events are used to accumulate and qualify data relevant to the type of sensor being oriented. If orientation is being determined for accelerometers, then GPS delta-Velocity (change in velocity) is used in conjunction with the three accelerometer data. Generally, all four of these values are accumulated during a qualification period. Qualification in this case will include the constraint that GPS delta-Heading is negligibly small. A recursive structure and post-processing algorithm are utilized to learn the required 3x3 orientation matrix from the qualified data.

In the case of an orthogonal 3-axis Angular Rate Sensor, qualified GPS delta-Heading and delta-delta-Altitude

**EP 1 315 945 B1**

data are paired up with the three angular-rate sensor data streams. (In this case, since the rate-of-change of the rate-of- change of the GPS measured altitude is very noisy, then the system may converge on the correct result slowly.)

In the case of an orthogonal 3-axis magnetic sensor (compass), GPS heading is used in conjunction with a known model of the earth's magnetic field (in three dimensions) along with the three magnetic flux values from the magnetic sensor elements. This is a special case where a known rotation matrix between the earth's nominal magnetic field vector and the navigation reference frame (for example North, East, Down) is used. The model of the earth' field must yield this transformation matrix as a function of the latitude and longitude.

In all cases, the three sensors generate data streams that correspond to a single reference stream. For this preferred embodiment, three accelerometers generate data streams and the GPS receiver generates a velocity data stream. The following steps are performed (under qualified conditions):

1. Three Acceleration Values are Accumulated until:

    (a) A time limit is reached, or
    (b) An accumulation value is attained

2. The corresponding change in GPS velocity is computed:
3. The Four Data Values are used to update the Recursive Orientation Estimate

These steps are only performed under the qualified conditions when GPS is known to be of acceptable accuracy and if GPS delta-Heading is negligibly small.

There are actually three recursive updates to be performed, one for each sensor. Each further refines the estimate of that sensor' gravity component and forward acceleration component.

There are various approaches to estimating these components. For this preferred embodiment, we will demonstrate a linear estimation technique that is common in the field of System Identification. (See State Variables for Engineers, 2nd. Ed.,DeRusso, Roy, Close, Desrochers, Wiley Interscience, Inc., 1998, chapter 8.) Note that the embodiment shown here does not include exponential forgetting, but that exponential forgetting can be added.

The following recursive equations are used:

Initialization :

$$\theta = \begin{bmatrix} Gravity\ Component\ Estimate \\ Forward\ Component\ Estimate \end{bmatrix} \quad \Leftarrow \quad Re\,cursive\ Estimates$$

$$h = \begin{bmatrix} 1 \\ GPS\ \Delta Heading \end{bmatrix} \quad \Leftarrow \quad New\ GPS\ Data$$

$$P = \begin{bmatrix} P_{11}(0) & P_{12}(0) \\ P_{21}(0) & P_{22}(0) \end{bmatrix} \quad \Leftarrow \quad Initial\ Co\,var\,iance\ Estimates$$

Recursive Update Equations :

$$K = Ph\left[1 + h^T Ph\right]^{-1} \quad \Leftarrow \quad Compute\ Gain$$

$$P = \left(I - Kh^T\right)P \quad \Longleftarrow \quad \text{Update Covariance}$$

$$\theta = \theta + \left(K\left(Accumulated\,Turn - \left(h^T\theta\right)\right)\right) \quad \Longleftarrow \quad \text{Update Estimates}$$

With the assumption of zero-mean-vehicle-pitch and zero-mean-vehicle-roll during the acquisition of data, these recursive equations produce estimates that can be used in the following section to generate a transformation matrix that will rotate the sensor reference frame data to the vehicle reference frame. With the assumption of constant-mean-vehicle-pitch and constant-mean-vehicle- roll during the acquisition of data, these recursive equations produce estimates that can be used in the following section to generate a transformation matrix that will rotate the sensor reference frame data to the wandering azmuth reference frame. (This is identical to the vehicle reference frame, but it is level on earth as opposed to level within the vehicle.) By way of example, in some locations, roads are contoured for water drainage. The wander-azimuth frame will orient the data exactly forward in the vehicle but the left and down axes are rotated so that down points nominally down on earth, not in the vehicle. This is our generally accepted mode of usage.

the Orientation Matrix:
There are six numbers generated by the above recursive equations. They represent two 3-dimensional vectors:

$$\text{Gravity} = \begin{bmatrix} Gravity\ Component\ Estimate_i \\ Gravity\ Component\ Estimate_j \\ Gravity\ Component\ Estimate_k \end{bmatrix}$$

$$\text{Forward} = \begin{bmatrix} Forward\ Component\ Estimate_i \\ Forward\ Component\ Estimate_j \\ Forward\ Component\ Estimate_k \end{bmatrix}$$

Vector Magnitudes are now computed:

$$|Gravity| = \sqrt{\begin{array}{l} Gravity\ Component\ Estimate_i^2 + \\ Gravity\ Component\ Estimate_j^2 + \\ Gravity\ Component\ Estimate_k^2 \end{array}}$$

$$|Forward| = \sqrt{\begin{array}{l} Forward\ Component\ Estimate_i^2 + \\ Forward\ Component\ Estimate_j^2 + \\ Forward\ Component\ Estimate_k^2 \end{array}}$$

Unit Vectors are now computed:

$$\text{Unit Gravity} = \frac{1}{|Gravity|} \begin{bmatrix} Gravity\ Component\ Estimate_i \\ Gravity\ Component\ Estimate_j \\ Gravity\ Component\ Estimate_k \end{bmatrix}$$

$$\text{Unit Forward} = \frac{1}{|Forward|} \begin{bmatrix} Forward\ Component\ Estimate_i \\ Forward\ Component\ Estimate_j \\ Forward\ Component\ Estimate_k \end{bmatrix}$$

Unit Left = Unit Forward X Unit Gravity
These nine numbers now form the Desired Transformation Matrix:

$$C_s^w = C_s^b C_b^w = \begin{bmatrix} Unit\ Forward_i & Unit\ Forward_j & Unit\ Forward_k \\ Unit\ Left_i & Unit\ Left_j & Unit\ Left_k \\ Unit\ Gravity_i & Unit\ Gravity_j & Unit\ Gravity_k \end{bmatrix}$$

Example of Use:

$$A_s = \begin{bmatrix} i \\ j \\ k \end{bmatrix} \quad \Leftarrow \quad \text{Sensor Reference Frame Acceleration}$$

$$A_b = C_s^b A_s \quad \Leftarrow \quad \text{Acceleration Transformed to Vehicle Body Frame}$$

$$A_w = C_s^b C_b^w A_s = C_s^w A_s \quad \Leftarrow \quad \text{Acceleration Transformed to Wander Azimuth Frame}$$

$$A_w = \begin{bmatrix} Unit\ Forward_i & Unit\ Forward_j & Unit\ Forward_k \\ Unit\ Left_i & Unit\ Left_j & Unit\ Left_k \\ Unit\ Gravity_i & Unit\ Gravity_j & Unit\ Gravity_k \end{bmatrix} \begin{bmatrix} i \\ j \\ k \end{bmatrix}$$

Assuming Zero - Mean - Vehicle - Roll and Zero - Mean - Vehicle - Pitch:
Then:

$$C_b^w = I \qquad C_s^w = C_s^b \qquad A_b = A_w$$

.

During normal operation of the vehicle, the orientation of the accelerometer 42 in the vehicle 32 may be continuously checked and updated. The navigation system 20 of the present invention provides an easy to install multi-axis accelerometer with improved accuracy.

In accordance with the provisions of the patent statutes and jurisprudence, exemplary configurations described above are considered to represent a preferred embodiment of the invention. However, it should be noted that the invention can be practiced otherwise than as specifically illustrated and described without departing from its scope, which is defined by the appended claims.

**Claims**

1. A vehicle navigation system (20) comprising:

an inertial sensor (36,38,42) which generates a plurality of sensor signals each associated with an axis of the sensor; and
means for propagating a position of a vehicle (32) in which the inertial sensor is disposed, based on the plurality of sensor signals, the position propagating means using a transformation matrix based on global positioning system data for correcting misalignment between the axes of the inertial sensor and the corresponding axes of a frame of the vehicle;
the navigation system being **characterised by** means for transforming the plurality of sensor signals to a wander-azimuth reference frame of the vehicle.

2. A vehicle navigation system as set forth in claim 1 , **characterised in that** the vehicle navigation system is configured to be semi-portable and/or temporarily installed in a vehicle.

3. A vehicle navigation system as set forth in claim 2, **characterised in that** the vehicle navigation system is arranged to continuously check and update the orientation of the inertial sensor (36,38,42) so that if the semi-portable arrangement moves a little for any reason, the movement will be detected and compensation therefor made while the vehicle is moving.

4. A method of calibrating an inertial sensor (36,38,42) in a vehicle navigation system (20) comprising:

using an inertial sensor to generate a plurality of signals which are each associated with an axis of the sensor;
propagating a position of a vehicle (32) in which the inertial sensor is disposed, using the plurality of sensor signals and a transformation matrix based on global positioning system data which corrects misalignment between the axes of the inertial sensor and the corresponding axes of a frame of the vehicle,
**characterised by**
transforming the plurality of sensor signals to a wander-azimuth reference frame of the vehicle.

**Patentansprüche**

1. Fahrzeugnavigationssystem (20), umfassend:

einen Inertialsensor (36, 38, 42), der eine Mehrzahl von Sensorsignalen erzeugt, von denen jedes mit einer Achse des Sensors assoziiert ist; und
Mittel zum Propagieren einer Position eines Fahrzeugs (32), in dem der Inertialsensor angeordnet ist, basierend auf der Mehrzahl von Sensorsignalen, wobei die Positionspropagierungsmittel eine Transformationsmatrix verwenden, die auf globalen Positionierungssystemdaten basiert, um Ausrichtungsfehler zwischen den Achsen des Inertialsensors und den korrespondierenden Achsen eines Rahmens des Fahrzeugs zu korrigieren;

**gekennzeichnet durch**:

Mittel zum Transformieren der Mehrzahl von Sensorsignalen in einen Wander-Azimut-Referenzrahmen des Fahrzeugs.

**2.** Fahrzeugnavigationssystem nach Anspruch 1,
**dadurch gekennzeichnet, dass** das Fahrzeugnavigationssystem ausgestaltet ist, semi-portabel und/oder zeitweise in dem Fahrzeug installiert zu sein.

**3.** Fahrzeugnavigationssystem nach Anspruch 2,
**dadurch gekennzeichnet, dass** das Fahrzeugnavigationssystem ausgestaltet ist, die Orientierung des Inertialsensors (36, 38, 42) fortlaufend zu überprüfen und zu aktualisieren, so dass, wenn die semi-portable Einrichtung sich aus irgendeinen Grund ein wenig bewegt, die Bewegung detektiert wird und eine Kompensation hierfür durchgeführt wird während sich das Fahrzeug bewegt.

**4.** Verfahren zum Kalibrieren eines Inertialsensors (36, 38, 42) in einem Fahrzeugnavigationssystem (20) umfassend:

Verwenden eines Inertialsensors, um eine Mehrzahl von Signalen zu erzeugen, von denen jedes mit einer Achse des Sensors assoziiert ist;
Propagieren einer Position eines Fahrzeugs (32), in dem der Inertialsensor angeordnet ist, unter Verwendung der Mehrzahl von Sensorsignalen und einer Transformationsmatrix, die auf globalen Positionierungssystemdaten basiert und die Ausrichtungsfehler zwischen den Achsen des Inertialsensors und den korrespondierenden Achsen eines Rahmens des Fahrzeugs korrigiert;

**gekennzeichnet durch**:

Transformieren der Mehrzahl von Sensorsignalen in einen Wander-Azimut-Referenzrahmen des Fahrzeugs.

**Revendications**

**1.** Système de navigation (20) monté à bord d'un véhicule, comprenant :

➢ un capteur inertiel (36, 38, 42) qui génère une pluralité de signaux de capteur, associés chacun à un axe du capteur ; et
➢ des moyens adaptés pour propager une position d'un véhicule (32) dans lequel le capteur inertiel est installé, sur la base de la pluralité de signaux de capteur, les moyens de propagation de position utilisant une matrice de transformation basée sur des données d'un système de positionnement global pour corriger un défaut d'alignement entre les axes du capteur inertiel et les axes correspondants d'un châssis du véhicule ;

le système de navigation étant **caractérisé par** des moyens adaptés pour transformer la pluralité de signaux de capteur en un référentiel en azimut d'instabilité directionnelle du véhicule.

**2.** Système de navigation monté à bord d'un véhicule selon la revendication 1, **caractérisé en ce que** le système de navigation monté à bord d'un véhicule est configuré de façon à être semi-portable et/ou à être installé temporairement à bord d'un véhicule.

**3.** Système de navigation monté à bord d'un véhicule selon la revendication 2, **caractérisé en ce que** le système de navigation monté à bord d'un véhicule est configuré de façon à contrôler et à mettre à jour en continu l'orientation du capteur inertiel (36, 38, 42), de façon à ce que, si le système semi-portable se déplace légèrement pour quelque raison que ce soit, le mouvement soit détecté et qu'un ajustement soit fait tandis que le véhicule se déplace.

**4.** Procédé d'étalonnage d'un capteur inertiel (36, 38, 42) installé dans un système de navigation (20) monté à bord d'un véhicule, le procédé consistant :

➢ à utiliser un capteur inertiel pour générer une pluralité de signaux de capteur qui sont associés, chacun, à un axe du capteur ;
➢ à propager une position d'un véhicule (32) dans lequel le capteur inertiel est installé, en utilisant la pluralité de signaux de capteur et une matrice de transformation basée sur des données d'un système de positionnement global pour corriger un défaut d'alignement entre les axes du capteur inertiel et les axes correspondants d'un châssis du véhicule ; le procédé étant **caractérisé par** :

➢ la transformation de la pluralité de signaux de capteur en un référentiel en azimut d'instabilité directionnelle du véhicule.

## Fig-1

## Fig-2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0017607 A

- US 6029111 A

**Non-patent literature cited in the description**

- **DeRusso ; Roy ; Close ; Desrochers.** State Variables for Engineers. Wiley Interscience, Inc, 1998